# EUROPÄISCHE PATENTSCHRIFT

(11) **EP 2 522 474 B1**
(45) Veröffentlichungstag und Bekanntmachung des Hinweises auf die Patenterteilung: **08.07.2015**
(21) Anmeldenummer: 12003587.8
(22) Anmeldetag: 08.05.2012
(51) Int. Cl.: B26D 7/06, B26D 7/32, B65B 5/00, B65G 47/64, B65G 47/71, B26D 1/14

(54) **Schneidemaschine**
Cutting machine
Machine à découper

(30) Priorität: 10.05.2011 DE 102011101101
(43) Veröffentlichungstag der Anmeldung: 14.11.2012
(73) Patentinhaber: Bizerba GmbH & Co. KG, 72336 Balingen (DE)
(72) Erfinder: Koch, Nikolaus, 72351 Geislingen (DE)
(74) Vertreter: Wagner, Jürgen

(56) Entgegenhaltungen:
- EP-B1- 1 149 782
- WO-A1-01/47793
- AT-B- 344 037
- DE-A1- 10 163 424

## Beschreibung

Die Erfindung betrifft eine Schneidemaschine nach den Merkmalen des Oberbegriffs des Anspruchs 1.

Solche Schneidemaschinen sind aus der Praxis wohl bekannt. Die AT 344 037 zeigt beispielsweise eine Schneidemaschine, bei der Scheiben eines strangförmigen Lebensmittels abgetrennt und auf einem motorisch angetriebenen Ablagetisch abgelegt werden um zweidimensionale Ablagefiguren bzw. Muster zu bilden. Die automatisch gebildeten Ablagemuster werden dann anschließend manuell verpackt.

Aus der EP 1 149 782 B1 ist eine Rangiereinheit einer Transportvorrichtung für Schneidgutportionen bekannt. Diese Rangiereinheit verteilt Schneidgutportionen eines Lebensmittels, um beispielsweise zweireihig angelieferte Schneidgutportionen auf drei- oder mehrreihige Verpackungsmaschinen zu verteilen. Nachteilig ist hier der große Platzbedarf dieser Rangiereinrichtung.

In der WO 01/47793 A1 ist eine Transportvorrichtung für einen Slicer mit einem beweglichen Ende offenbart.

Der Erfindung liegt die Aufgabe zugrunde, eine Schneidemaschine zu schaffen, die eine einfache automatische Verpackung der abgetrennten Schneidgutportionen ermöglicht und insbesondere nur einen geringen Bauraum benötigt.

Diese Aufgabe wird erfindungsgemäß mit einer Schneidemaschine nach den Merkmalen des Anspruchs 1 gelöst.

Die Schneidemaschine weist eine Bandfördervorrichtung auf, welche zwei Abschnitte aufweist, wobei ein erster Abschnitt der Bandfördervorrichtung eine vorzugsweise ortsfest angeordnete Ablagefläche bildet und ein zweiter Abschnitt mit der Ablagefläche schwenkbar verbunden ist. Über eine Ablegevorrichtung werden abgetrennte Scheiben hinter dem Schneidmesser aufgenommen und zu der Ablagefläche transportiert. Um ein sauberes Ablegebild der Scheiben zu erzielen, ist es notwendig, dass die Ablegevorrichtung stets gleichbleibende örtliche Verhältnisse vorfindet. Dies wird mit dem ersten Abschnitt der Bandfördervorrichtung erreicht. Ein automatischer Abtransport der Schneidgutportionen benötigt jedoch eine gewisse mechanische Flexibilität. Dieser Widerspruch wird mittels des zweiten Abschnitts der Bandfördervorrichtung aufgelöst, der mit dem ersten Abschnitt schwenkbar verbunden ist. Dadurch können mechanische Toleranzen oder Maßunterschiede ausgeglichen werden und die Schneidgutportionen auf einfache Art und Weise weiter verarbeitet werden.

Eine besonders gute Flexibilität kann erzielt werden, indem der zweite Abschnitt der Bandfördervorrichtung in der Höhe und seitlich über eine Justiervorrichtung verstellbar ist, insbesondere indem er nach oben und unten und/oder quer zu der Transportrichtung schwenkbar und feststellbar ist.

In einer Ausführung kann vorgesehen sein, dass der erste Abschnitt eine Schwenkachse aufweist und der zweite Abschnitt über diese Schwenkachse schwenkbar an dem ersten Abschnitt gelagert ist. Dadurch kann ein besonders kompakter und flexibler Aufbau realisiert werden.

Um einen guten Transport der Scheiben und gleichzeitig eine kompakte Konstruktion zu erzielen kann weiter vorgesehen sein, dass die Bandfördervorrichtung zum Transport des Schneidguts wenigstens ein geschlossen umlaufendes Transportband aufweist, welches um den ersten Abschnitt und den zweiten Abschnitt geschlossen umläuft. Die Bandspannung kann durch eine Spannvorrichtung konstant gehalten werden, um insbesondere bei Schwenkvorgängen eine gleichbleibende Bandspannung und damit einen guten Schneidguttransport zu ermöglichen.

Um eine höhere Schneidekapazität zu erreichen kann vorgesehen sein, dass der zweite Abschnitt der Bandfördervorrichtung zwei oder mehr, insbesondere drei oder vier parallele Transportarme aufweist, wobei jeder der Transportarme ein eigenes bzw. separat über den jeweiligen Transportarm und den ersten Abschnitt umlaufendes Transportband aufweist. Damit kann die Bandfördervorrichtung mehrere parallele Transportbänder aufweisen. Jeder Transportarm kann dann eine Schneidgutportion an eine nachfolgende Verarbeitungs- oder Verpackungsvorrichtung transportieren. Insbesondere bei Verpackungsmaschinen mit mehreren parallelen Linien kann so ein gesteigerter Durchsatz erzielt werden. Jeder Transportarm kann so aufgebaut sein, dass er jeweils einerends eine Umlenkrolle aufweist und andernends an einer Schwenkachse des ersten Abschnitts gelagert ist.

Vorzugsweise kann in einer Ausführung vorgesehen sein, dass die Schneidemaschine mit der Verarbeitungs- oder Verpackungsvorrichtung mechanisch fest verbunden ist, wobei beispielsweise mittels einer längsverstellbaren Strebe deren Abstand exakt justierbaren ist.

Es ist insbesondere vorgesehen, dass jeder Transportarm ein separates Transportband aufweist, welches um den ersten Abschnitt und den zweiten Abschnitt der Bandfördervorrichtung geschlossen umläuft, insbesondere dass das Transportband über die Umlenkrolle des Transportarmes und eine Eingangsrolle des ersten Abschnitts der Bandfördervorrichtung umlaufend geführt ist.

Um auch hohe hygienische Anforderungen zu erfüllen ist vorgesehen, dass das Transportband als ein Geflechtband ausgebildet ist. Das Geflecht ist vorzugsweise aus Metall, Stahl oder Kunststoff ausgebildet. Zu Reinigungszwecken kann das Transportband abgenommen und mittels einer Spülmaschine gereinigt werden. Zudem weist das Geflechtband eine entsprechende Flexibilität auf, so dass es Schwenkbewegungen der Bandfördervorrichtung problemlos mitmacht.

Eine konstruktiv besonders einfache Ausführung ergibt sich, wenn die Eingangsrolle des ersten Abschnitts als gemeinsame Antriebsrolle für die Transportbänder ausgebildet ist und einen Antriebsmotor aufweist.

Ein besonders gutes Ablagebild lässt sich erzielen, wenn eine Steuerungsvorrichtung vorgesehen ist, die gleichzeitig die Ablagevorrichtung und die Bandfördervorrichtung, insbesondere die Antriebsrolle der Bandfördervorrichtung ansteuert. Insbesondere zweidimensionale Muster oder Ablagebilder können so gelegt werden, indem die Ablegevorrichtung die Scheiben quer zu der Transportrichtung transportiert und das Transportband bzw. die Transportbänder die Scheiben in Transportrichtung transportiert. Dadurch lassen sich zwei Dimensionen der Ablagebilder steuern.

Eine Anwendung der erfindungsgemäßen Schneidemaschine kann in der Lebensmittelverarbeitung beim Aufschneiden und Verpacken von frischen strangförmigen Lebensmitteln wie beispielsweise Wurst oder Käse oder Fisch erfolgen.

Weitere Ausführungsbeispiele der Erfindung sind in den Figuren dargestellt und der dazugehörenden Beschreibung beschrieben.

Es zeigen,
- Figur 1:: Eine erfindungsgemäße Schneidemaschine mit einer Verpackungsmaschine in Seitenansicht;
- Figur 2:: Die erfindungsgemäße Schneidemaschine mit einer Verpackungsmaschine in Draufsicht;
- Figuren 3a, 3b:: Eine schematische Darstellung einer Bandfördervorrichtung mit Schneidgutübergabe an eine Verpackungsmaschine in Draufsicht;
- Figur 4:: Eine Darstellung einer Bandfördervorrichtung in Draufsicht;
- Figur 5:: Eine vergrößerte Darstellung eines Transportarmes in Draufsicht;
- Figur 6:: Eine Seitendarstellung einer Bandfördervorrichtung.

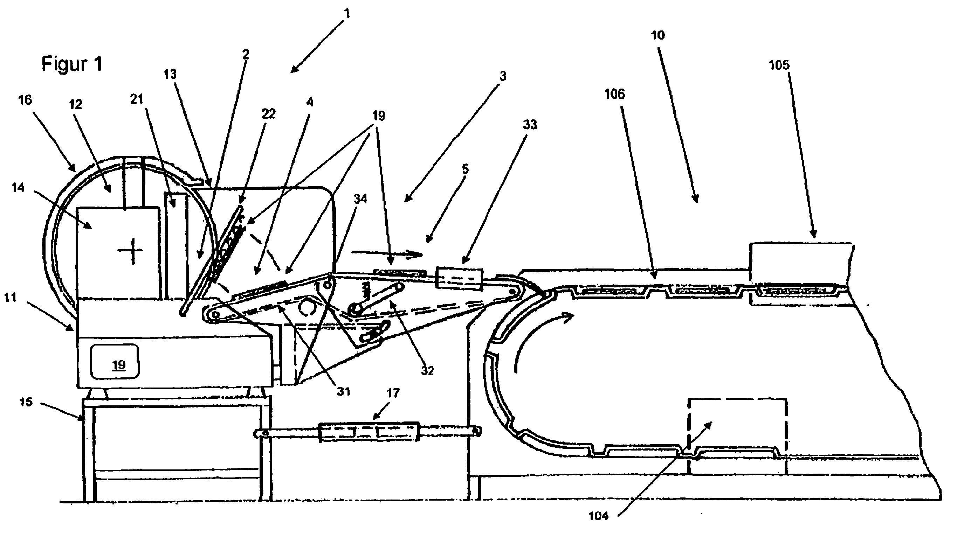

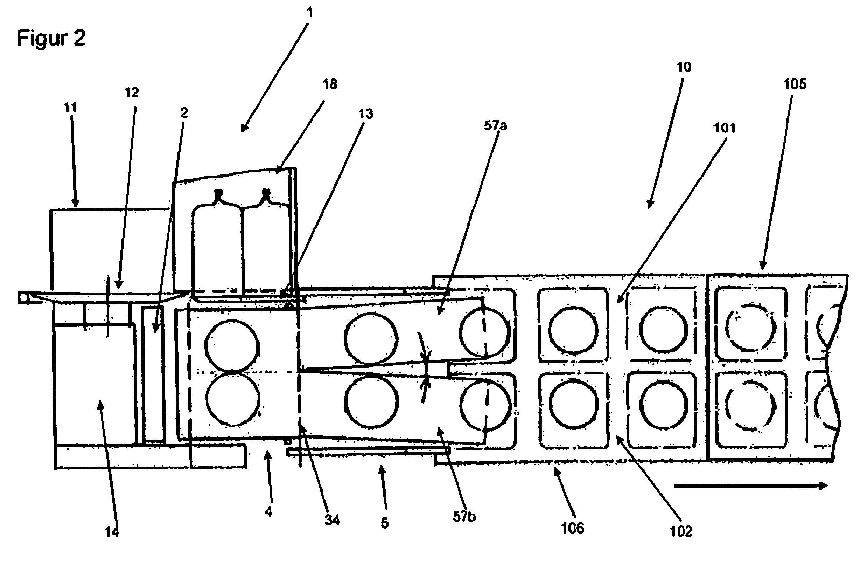

In den **Figuren 1** **und** **2** wird eine Schneidemaschine 1 mit einer Verpackungsmaschine 10 gezeigt. Der Abstand der Schneidemaschine 1 zu der Verpackungsmaschine 10 kann über eine längenverstellbare Strebe 17 eingestellt werden. Die Schneidemaschine 1 weist ein Maschinengehäuse 11 auf und besitzt ein in einer Schneidebene umlaufendes Schneidmessser 12, welches von einem Motor angetrieben ist, der in einem Motorturm 13 eines Schneidemaschinengehäuses 11 angeordnet ist. über ein Gestell 15 ist das Schneidemaschinengehäuses 11 auf dem Fußboden aufgestellt. Um die Verletzungsgefahr an dem Schneidmesser 12 zu verringern ist ein Messerschutzring 16 vorgesehen, der die Schneide des Schneidmessers 12 C-förmig umgibt. Das Schneidmesse 12 trennt Scheiben von Schneidgut ab, welches auf einem Schlitten 18 aufgelegt wird, indem der Schlitten parallel zu der Schneidebene hin- und herbewegt wird. Die Bewegung des Schlittens 18 kann dabei motorisch angetrieben oder manuell erfolgen.

Um gleichzeitig mehrere Scheiben abzuschneiden können auf dem Schlitten gleichzeitig zwei strangförmige Lebensmittel nebeneinander platziert werden, wie in Figur 2 gezeigt ist. Die Stärke der Scheiben wird durch eine quer zu der Schneidebene verfahrbare Anschlagplatte 13 bestimmt. Entsprechend dem Spalt, den die Anschlagplatte 13 zu dem Schneidmesser 12 hin freigibt fällt die Dicke der abgetrennten Scheiben aus.

Die abgetrennten Scheiben werden hinter dem Schneidmesser 12 von einer Ablegevorrichtung 2 übernommen und in einem Ablegebereich platziert. Die Ablegevorrichtung 2 weist einen Kettenrahmen 21 und einen angetriebenen Abschläger 22 auf. Der Kettenrahmen 21 weist umlaufende Ketten mit Spitzen auf, die das Schneigut haltern und quer zu der Schneidebene von dem Schneidmesser 12 weg transportieren. Der Abschläger 22 löst die Scheiben von dem Kettenrahmen 21 und legt diese dann auf einer ebenen Ablagefläche ab.

Eine Steuerungsvorrichtung 19 der Schneidemaschine 1 übernimmt dabei die Steuerung des Kettenrahmens 21 und des Abschlägers 22. Über den Zeitpunkt des Abschlagens bzw. über die Distanz des Transports der Scheibe auf dem Kettenrahmen 21 kann die Position der Scheibe in Querrichtung zu der Schneidebene bestimmt werden. Dabei können einzelne oder mehrere Scheiben zu Schneidgutportionen portioniert werden. Über eine gesteuerte Querverschiebung der einzelnen Scheiben durch den Kettenrahmen 21 bzw. der Steuerungsvorrichtung können mehre nebeneinanderliegende Scheidgutportionen gebildet werden.

Die Schneidemaschine 1 weist eine Bandfördervorrichtung 3 auf, die den Transport der abgetrennten Scheiben bzw. der Schneidgutportionen von der Schneidemaschine 1 hin zu der Verpackungsmaschine 10 übernimmt. Die Bandfördervorrichtung umfasst den Ablagebereich bildenden ersten Abschnitt 4 und einen daran unmittelbar, d. h. lückenlos angeschlossenen zweiten Abschnitt 5. Der erste Abschnitt 4 ist mit dem zweiten Abschnitt 5 über eine Schwenkachse 34 schwenkbar verbunden. Beide Abschnitte werden von einem gemeinsamen Transportband 31 umfasst. Eine Spannvorrichtung 32 hält das Transportband 31 unter einer konstanten Bandspannung.

Der erste Abschnitt 4 ist ortsfest an der Schneidemaschine 1 angeordnet, insbesondere ortsfest zu der Ablegevorrichtung 2, so dass sich ein sauberes und reproduzierbares Ablagebild des Schneidguts ergibt. Der zweite Abschnitt 5 ist um die Schwenkachse 34 nach oben und unten schwenkbar gelagert, damit Höhenunterschiede zu der Verpackungsmaschine ausgeglichen werden können. Gleichzeitig kann das Ende des zweiten Abschnitts 5 quer zu der durch Pfeile angezeigten Transportrichtung der Bandfördervorrichtung 3 geschwenkt werden, um eine eventuelle seitliche Toleranz zu der Verpackungsmaschine 10 auszugleichen.

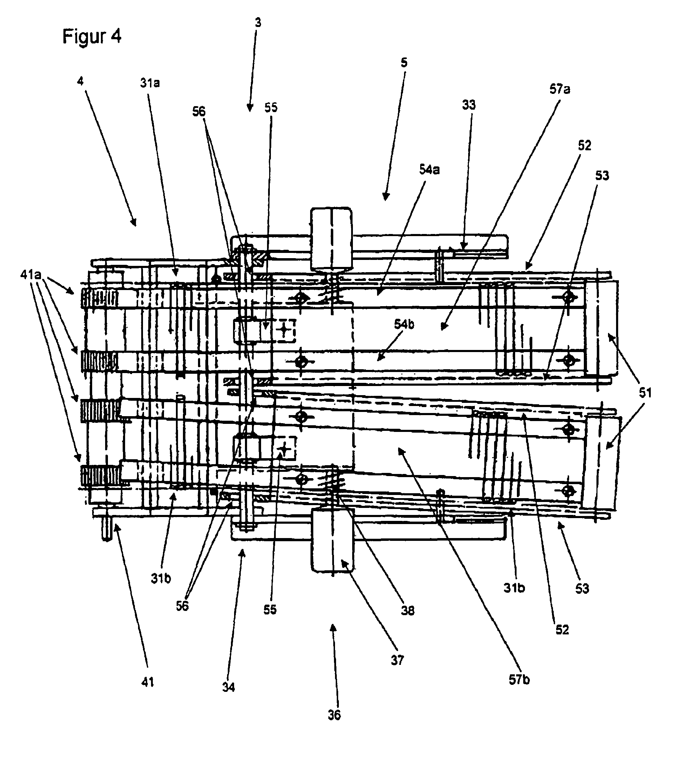

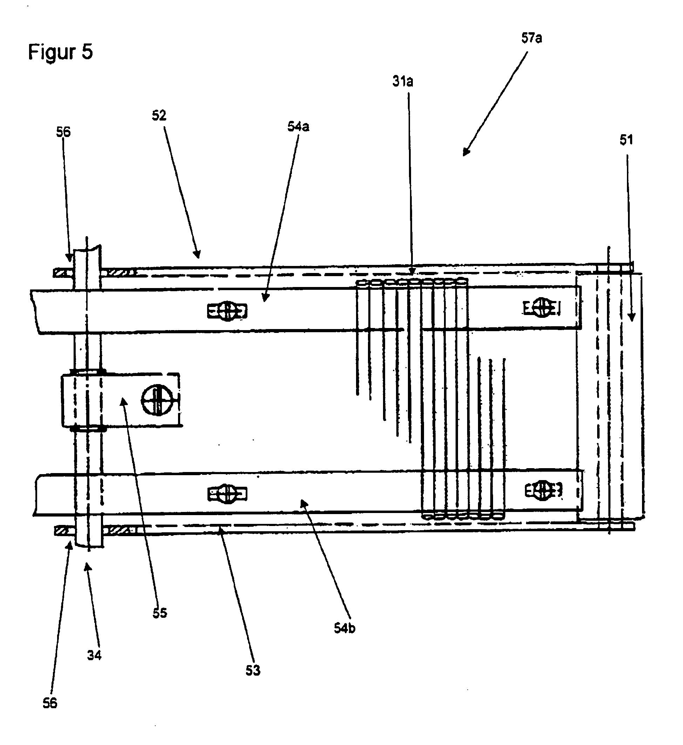

Wie in Figur 2 gezeigt, weist der zweite Bereich mehrere Transportarme 57a, 57b auf. Jeder der Transportarme weist ein Transportband 31a und 31b auf, wobei jedes der Transportbänder 31a, 31b um beide Abschnitte 4 und 5 der Bandfördervorrichtung geschlossen umläuft. Die Transportarme 57a, 57b können in der Höhe gemeinsam um die Schwenkachse 34 geschwenkt werden und zugleich in Querrichtung unabhängig voneinander quer zu der Schwenkachse 34 geschwenkt werden. Dazu sind die Transportarme 57a, 57b über Langlöcher 56 auf der Schwenkachse 34 gelagert, wie aus den **Figuren 4** **und** **5** ersichtlich ist.

Die Verpackungsmaschine 10 weist zwei parallele Verpackungslinien 101 und 102 auf, die jeweils von einem Transportarm 57a bzw. 57b mit Schneidgutportionen beschickt werden. Die Verpackungsmaschine stellt über ein Tiefziehwerkzeug 104 durch Tiefziehen aus einer Folie 106 Lebensmittelverpackungen her, die mit den einzelnen Schneidgutportionen befüllt werden. Ein Siegelwerkzeug 105 verschweißt dann die einzelnen Verpackungen luftdicht.

Um ein exaktes Befüllen der Lebensmittelverpackungen zu ermöglichen steuert die Steuerungsvorrichtung 19 der Schneidemaschine 1 die Ablegevorrichtung 2 und die Bandfördervorrichtung 3. Dabei steuert die Steuerungsvorrichtung 19 den Kettenrahmen und den Abschläger, um ein Querverschiebung des Schneiduts quer zu der Transportrichtung zu erzielen. Eine Längsverschiebung des Schneidguts in Transportrichtung erzielt die Steuerungsvorrichtung 19 durch das Ansteuern des Transportbandes 31. So kann die Steuerungsvorrichtung beliebige 2-dimensionale Figuren legen. Beispielsweise können einzelne nebeneinanderliegende Portionen gebildet werden, ein geschupptes Ablagebild oder sonstige Figuren wie beispielsweise Kreise gelegt werden.

Über eine am Ende der Transportarme angebrachte, mit der Steuerungsvorrichtung 19 verbundene Lichtschranke 33 kann die Steuerungsvorrichtung 19 die Schneidgutportionen vereinzeln bzw. den genauen Übergabezeitpunkt der Schneidgutportionen an die Verpackungsmaschine 10 steuern. Hierzu kann noch eine Synchronisationsleitung zwischen der Steuerungsvorrichtung 19 und der Verpackungsmaschine 10 vorgesehen werden.

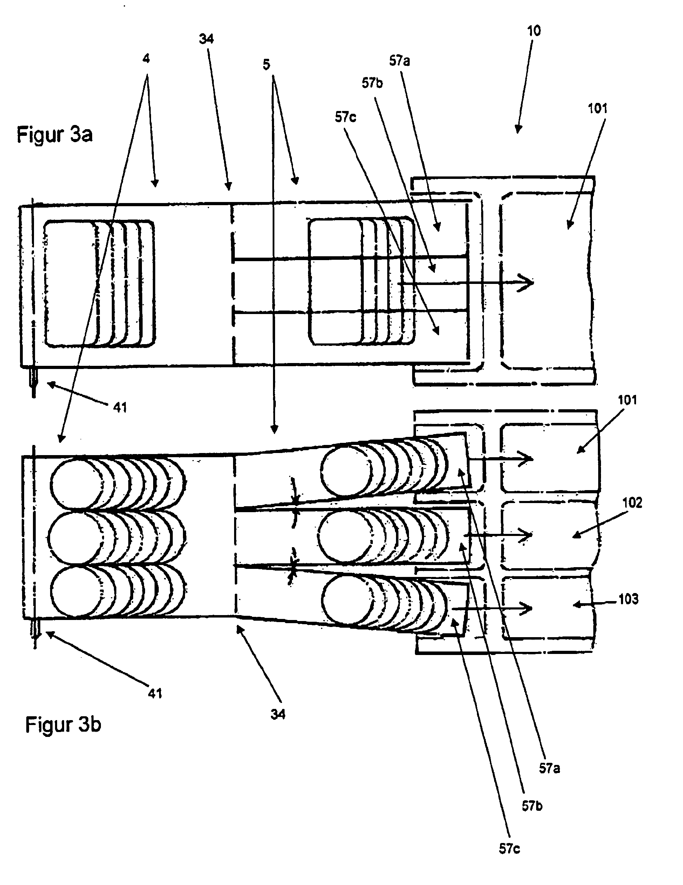

Die Anzahl der Transportarme in Abschnitt 2 ist variabel. Beispielsweise ist in den **Figuren 3a und 3b** eine Bandfördervorrichtung 3 mit drei nebeneinander liegenden Transportarmen 57a, 57b, und 57c gezeigt. In der Figur 3a sind alle drei Transportarme 57a, 57b, und 57c zueinander parallel gestellt.

Generell kann eine große Schneidgutportion über mehrere Transportarme transportiert und in eine Verpackungsmaschine 10 mit einer Verpackungslinie 101 gefüllt werden, wie in Figur 3a gezeigt. Oder es kann eine Verpackungsmaschine 10 mit drei eng nebeneinander liegenden Verpackungslinien befüllt werden. In der Figur 3b ist eine Ausführungsform gezeigt, die drei nebeneinander liegende Verpackungslinien 101, 102, 103 aufweist, die etwas breiter sind, und die durch das Schwenken der Transportarme 57a, 57b, und 57c quer zu der durch Pfeile angezeigten Transportrichtung jeweils exakt befüllt werden.

Die Figur 4 zeigt eine schematische Darstellung einer Bandfördervorrichtung 3 mit zwei Transportarmen 57a und 57b. In der Figur 5 ist ein einzelner Transportarm 57a vergrößert dargestellt. Diese Figuren gelten beispielhaft für den konstruktiven Aufbau der Bandfördervorrichtung 3, wobei alle Ausführungen mit unterschiedlicher Anzahl von Transportarmen umfasst sind, da sich diese im konstruktiven Aufbau nicht wesentlich unterscheiden.

Der Antrieb der Bandfördervorrichtung 3 erfolgt über eine Antriebsrolle 41, die über einen Motor angetrieben ist und die Transportbänder 31a und 31b antreibt. Die Transportbänder 31a und 31b sind als Geflechtbänder aus einem Drahtgeflecht ausgeführt. Auf der Antriebsrolle 41 sind Zahnräder 41a drehfest angebracht, die mit den Transportbändern 31a und 31b kämmen und antreiben. Der erste Abschnitt 4 der Bandfördervorrichtung 3 ist fest mit dem Gehäuse 11 der Schneidemaschine 1 verbunden und dient als Ablagebereich für das Schneidgut. Eine Schwenkachse 34 verbindet den ersten Abschnitt 4 schwenkbar mit dem zweiten Abschnitt 5. Über eine Halterung 55 ist der zweite Abschnitt zudem drehbar mit der Schwenkachse 34 verbunden. Über eine drehbare Verbindung ist die Halterung 55 jeweils mit dem Transportarm verbunden, so dass der Drehpunkt des zweiten Abschnitts durch die Halterung 55 bestimmt wird.

Der zweite Abschnitt 5 weist zwei Transportarme 57a und 57b auf. Jeder der Transportarme 57a und 57b weist zwei Führungsprofile 52 und 53 auf, die parallel und zueinander beabstandet angeordnet sind. Die Führungsprofile 52 und 53 haltern die Komponenten der Transportarme und dienen so als stabiler Rahmen. Um eine Schwenkbewegung quer zu der Transportrichtung zu ermöglichen, weisen die Die Führungsprofile 52 und 53 jeweils an einem Ende Langlöcher 56 auf, mit denen sie auf der Schwenkachse 34 verschiebbar gehaltert sind. Der kleinste Durchmesser der Langlöcher 56 entspricht dabei dem Außendurchmesser der Schwenkachse 34. Die Länge der Langlöcher 56 ergibt sich aus dem maximalen Schwenkwinkel der Transportarme 57a und 57b. Am Ende der Führungsprofile 52 und 53 ist eine Umlenkrolle 51 angeordnet, über die das Transportband 31a bzw. 31b geführt ist und die drehbar in den Führungsprofilen 52 und 53 gelagert ist.

An ihrer Oberseite weisen die Transportarme 57a und 57b zwei parallele Auflageschienen 54a und 54b auf, die als Auflage für das Transportband 31a bzw. 31b dienen. Um die mit dem Schwenken einhergehende Längenänderung auszugleichen sind die Auflageschienen 54a und 54b jeweils längsverschiebbar gelagert.

Um den zweiten Abschnitt 5 bzw. die Transportarme 57a und 57b seitlich schwenken zu können ist eine Verstellvorrichtung mit einem Drehgriff 37 vorgesehen. Die Verstellvorrichtung weist eine Spindel auf, die mit den Transportarmen zusammenwirkt um diese quer zu der Transportrichtung zu schwenken. Über eine Feder 38 wird die Verstellvorrichtung vorgespannt um mechanische Toleranzen auszugleichen.

Über eine seitlich der Bandfördervorrichtung 3 verschiebbar angeordnete Lichtschranke 33 können einzelne Schneidgutportionen detektiert und somit deren Transport gesteuert werden.

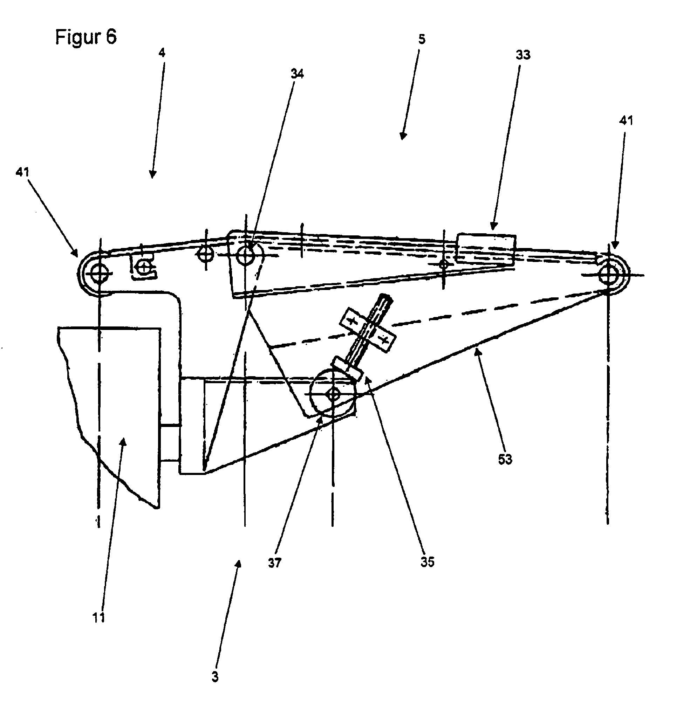

Eine Seitendarstellung der Bandfördervorrichtung 3 und deren Befestigung an dem Gehäuse 11 der Schneidemaschine 1 ist aus **Figur 6** ersichtlich. Eine Höhenverstellvorrichtung 35 ermöglicht das Verschwenken des zweiten Abschnitts 5 bzw. aller Transportarme des zweiten Abschnitts 5. Durch das Verschwenken des zweiten Abschnitts 5 in der Höhe können etwaige Höhendifferenzen zwischen der Schneidemaschine und der Verpackungsmaschine 10 ausgeglichen werden.

Die Höhenverstellvorrichtung 35 weist zur Höhenverstellung eine Spindel auf, die sich an dem ortsfesten ersten Abschnitt 4 abstützt und mit dem zweiten Abschnitt 5 zusammenwirkt. Durch Drehen der Spindel kann der zweite Abschnitt 5 um die Schwenkachse 34 geschwenkt werden, so dass sich die Höhe des Endes der Bandfördervorrichtung entsprechend ändert.

## Patentansprüche

1. Schneidemaschine zum Schneiden eines strangförmigen Lebensmittels in Scheiben, mit einem in einer Schneidebene rotierenden Schneidmesser (12) und einem parallel zu der Schneidebene verfahrbar gelagerten Schlitten (18) zur Auflage des insbesondere strangförmigen Schneidguts, wobei eine Ablegevorrichtung (2) die von dem Schneidmesser (12) abgetrennten Scheiben in einem Ablagebereich auf einer Ablagefläche ablegt,
**dadurch gekennzeichnet,**
**dass** ein erster Abschnitt (4) einer Bandfördervorrichtung (3) die Ablagefläche bildet und ein zweiter Abschnitt (5) der Bandfördervorrichtung (3) mit dem ersten Abschnitt schwenkbar verbunden ist und zwei oder mehr parallele Transportarme (57a, 57b) aufweist, die jeweils einerends eine Umlenkrolle (51) aufweisen und andernends an einer Schwenkachse (34) des ersten Abschnitts (4) gelagert sind.

2. Schneidemaschine nach Anspruch 1,
**dadurch gekennzeichnet,**
**dass** der zweite Abschnitt (5) der Bandfördervorrichtung (3) nach oben und unten und/oder quer zu der Transportrichtung schwenkbar und feststellbar ist.

3. Schneidemaschine nach einem der Ansprüche 1 oder 2,
**dadurch gekennzeichnet,**
**dass** jeder Transportarm (57a, 57b) ein separates Transportband (31a, 31b) aufweist, welches über die Umlenkrolle (51) des Transportarmes und eine Eingangsrolle (41) des ersten Abschnitts (4) der Bandfördervorrichtung (3) geschlossen umlaufend geführt ist.

4. Schneidemaschine nach einem der vorhergehenden Ansprüche,
**dadurch gekennzeichnet,**
**dass** die Eingangsrolle (41) einen Antriebsmotor aufweist und als Antriebsrolle für das Transportband oder die Transportbänder (31a, 31b) ausgebildet ist.

5. Schneidemaschine nach einem der vorhergehenden Ansprüche,
**dadurch gekennzeichnet,**
**dass** ein Transportarm (57a, 57b) zwei beabstandet und parallel zueinander verlaufende Führungsprofile (52, 53) aufweist, die einerends die Umlenkrolle (41) lagern und andernends über Langlöcher (56) an der Schwenkachse (34) gelagert sind.

6. Schneidemaschine nach einem der vorhergehenden Ansprüche,
**dadurch gekennzeichnet,**
**dass** eine Steuerungsvorrichtung gleichzeitig die Ablegevorrichtung (2) und die Antriebsrolle (41) des Transportbands zum Portionieren der Scheiben und/oder Anordnen der Scheiben in zweidimensionalen Mustern steuert, wobei die Ablegevorrichtung (2) die Scheiben quer zur Transportrichtung und das Transportband bzw. die Transportbänder (31a, 31b) die Scheiben in oder entgegen der Transportrichtung transportiert bzw. transportieren.

7. Verpackungsvorrichtung mit einer Schneidemaschine nach einem der vorhergehenden Ansprüche, wobei die Verpackungsvorrichtung (10) die von der Schneidemaschine (1) abgetrennten Scheiben verpackt,
**dadurch gekennzeichnet,**
**dass** über den zweiten Abschnitt (5) der Bandfördervorrichtung (3) eine Höhentoleranz und/oder Seitentoleranz zwischen der Schneidemaschine (1) und der Verpackungsvorrichtung (10) ausgleichbar ist.

8. Verpackungsvorrichtung nach Anspruch 7,
**dadurch gekennzeichnet,**
**dass** die Verpackungsvorrichtung mindestens zwei parallele Verpackungslinien (101, 102) aufweist und je ein Transportarm (31a, 31b) der Bandfördervorrichtung je eine Verpackungslinie (101, 102) mit Schneidgutportionen beschickt.

9. Verpackungsvorrichtung nach Anspruch 7 oder 8,
**dadurch gekennzeichnet,**
**dass** die Schneidemaschine (1) mit der Verpackungsvorrichtung (10) über eine in ihrer Länge einstellbare Verbindungsvorrichtung (17) fest verbunden ist.

## Claims

1. Slicing machine for slicing a strand-like foodstuff into slices, having a cutting knife (12) rotating in a slicing plane, and a carriage (18), mounted in a displaceable manner parallel to the slicing plane, for supporting the in particular strand-like product to be sliced, wherein a set-down device (2) sets down the slices cut off by the cutting knife (12) on a set-down surface in a set-down region,
**characterized**
**in that** a first section (4) of a belt conveyor device (3) forms the set-down surface and a second section (5) of the belt conveyor device (3) is pivotably connected to the first section and has two or more parallel transport arms (57a, 57b) which each have a deflection roller (51) at one end and are mounted on a pivot axle (34) of the first section (4) at the other end.

2. Slicing machine according to Claim 1,
**characterized**
**in that** the second section (5) of the belt conveyor device (3) is pivotable upwardly and downwardly and/or transversely to the transporting direction and fixable.

3. Slicing machine according to either of Claims 1 and 2,
**characterized**
**in that** each transport arm (57a, 57b) has a separate transport belt (31a, 31b) which is guided over the deflection roller (51) of the transport arm and an input roller (41) of the first section (4) of the belt conveyor device (3) in a manner encircling in a closed manner.

4. Slicing machine according to one of the preceding claims,
**characterized**
**in that** the input roller (41) has a drive motor and is configured as a drive roller for the transport belt or the transport belts (31a, 31b).

5. Slicing machine according to one of the preceding claims,
**characterized**
**in that** a transport arm (57a, 57b) has two guide profiles (52, 53) that are spaced apart from one another and extend parallel to one another and mount the deflection roller (41) at one end and are mounted on the pivot axle (34) at the other end via. slotted holes (56).

6. Slicing machine according to one of the preceding claims,
**characterized**
**in that** a control device simultaneously controls the set-down device (2) and the drive roller (41) of the transport belt in order to portion the slices and/or arrange the slices in two-dimensional patterns, wherein the set-down device (2) transports the slices transversely to the transporting direction and the transport belt or the transport belts (31a, 31b) transports or transport the slices in or counter to the transporting direction.

7. Packaging device having a slicing machine according to one of the preceding claims, wherein the packaging device (10) packages the slices cut off by the slicing machine (1),
**characterized**
**in that** a height tolerance and/or lateral tolerance between the slicing machine (1) and the packaging device (10) is compensatable via the second section (5) of the belt conveyor device (3).

8. Packaging device according to Claim 7,
**characterized**
**in that** the packaging device has at least two parallel packaging lines (101, 102) and in each case one transport arm (31a, 31b) of the belt conveyor device feeds in each case one packaging line (101, 102) with portions of sliced product.

9. Packaging device according to Claim 7 or 8,
**characterized**
**in that** the slicing machine (1) is firmly connected to the packaging device (10) via a length-adjustable connecting device (17).

## Revendications

1. Machine à découper pour découper en tranches un produit alimentaire en forme de boudin, comprenant un couteau de coupe (12) tournant dans un plan de coupe et un chariot (18) supporté de manière déplaçable parallèlement au plan de coupe pour l'appui du produit à découper notamment en forme de boudin, un dispositif de dépose (2) déposant les tranches sectionnées par le couteau de coupe (12) dans une région de dépose sur une surface de dépose,
**caractérisée en ce**
**qu'**une première portion (4) d'un dispositif de transport- de bande (3) forme la surface de dépose et une deuxième portion (5) du dispositif de transport de bande (3) est connectée de manière pivotante à la première portion et présente deux ou plus de deux bras de transport parallèles (57a, 57b), qui présentent à chaque fois à une extrémité une poulie de renvoi (51) et qui sont supportés à l'autre extrémité sur un axe de pivotement (34) de la première portion (4).

2. Machine à découper selon la revendication 1,
**caractérisée en ce que**
la deuxième portion (5) du dispositif de transport de bande (3) peut pivoter et être fixée vers le haut et le bas et/ou transversalement à la direction de transport.

3. Machine à découper selon l'une quelconque des revendications 1 ou 2,
**caractérisée en ce que**
chaque bras de transport (57a, 57b) présente une bande de transport séparée (31a, 31b) qui est guidée en circuit fermé sur la poulie de renvoi (51) du bras de transport et une poulie d'entrée (41) de la première portion (4) du dispositif de transport de bande (3).

4. Machine à découper selon l'une quelconque des revendications précédentes,
**caractérisée en ce que**
la poulie d'entrée (41) présente un moteur d'entraînement et est réalisée sous forme de poulie d'entraînement pour la bande de transport ou les bandes de transport (31a, 31b).

5. Machine à découper selon l'une quelconque des revendications précédentes,
**caractérisée en ce**
**qu'**un bras de transport (57a, 57b) présente deux profilés de guidage espacés et s'étendant parallèlement l'un à l'autre (52, 53) qui supportent à une extrémité la poulie de renvoi (41) et qui sont supportés à l'autre extrémité par le biais de trous oblongs (56) sur l'axe de pivotement (34).

6. Machine à découper selon l'une quelconque des revendications précédentes,
**caractérisée en ce**
**qu'**un dispositif de commande commande simultanément le dispositif de dépose (2) et la poulie d'entraînement (41) de la bande de transport pour portionner les tranches et/ou pour disposer les tranches en motifs bidimensionnels, le dispositif de dépose (2) transportant les tranches transversalement à la direction de transport et la bande de transport ou les bandes de transport (31a, 31b) transportant les tranches dans la direction de transport ou dans la direction inverse.

7. Dispositif d'emballage comprenant une machine à découper selon l'une quelconque des revendications précédentes, le dispositif d'emballage (10) emballant les tranches sectionnées par la machine à découper (1),
**caractérisé en ce**
**qu'**une tolérance de hauteur et/ou une tolérance latérale entre la machine à découper (1) et le dispositif d'emballage (10) peuvent être compensées par le biais de la deuxième portion (5) du dispositif de transport de bande (3).

8. Dispositif d'emballage selon la revendication 7,
**caractérisé en ce que**
le dispositif d'emballage présente au moins deux lignes d'emballage parallèles (101, 102) et à chaque fois un bras de transport (31a, 31b) du dispositif de transport de bande garnit une ligne d'emballage respective (101, 102) avec des portions de produits à découper.

9. Dispositif d'emballage selon la revendication 7 ou 8,
**caractérisé en ce que**
la machine à découper (1) est connectée fixement au dispositif d'emballage (10) par le biais d'un dispositif de connexion (17) de longueur ajustable.
